(19) **Europäisches Patentamt / European Patent Office / Office européen des brevets**

(11) **EP 4 772 294 A1**

(12) **EUROPEAN PATENT APPLICATION**
published in accordance with Art. 153(4) EPC

(43) Date of publication:
08.07.2026 Bulletin 2026/28

(21) Application number: 24903260.8

(22) Date of filing: 06.09.2024

(51) International Patent Classification (IPC):
*B22F 1/00* (2022.01)   *B22F 1/05* (2022.01)
*B22F 10/28* (2021.01)   *B23K 35/30* (2006.01)
*C22C 38/00* (2006.01)   *C22C 38/58* (2006.01)

(52) Cooperative Patent Classification (CPC):
**B22F 1/00; B22F 1/05; B22F 10/28; B23K 35/30; C22C 38/00; C22C 38/58;** Y02P 10/25

(86) International application number:
**PCT/JP2024/032115**

(87) International publication number:
**WO 2025/126597 (19.06.2025 Gazette 2025/25)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **12.12.2023 JP 2023208932**

(71) Applicant: JFE Steel Corporation
**Tokyo 100-0011 (JP)**

(72) Inventors:
• **INOUE, Keishi**
 **Tokyo 100-0011 (JP)**
• **TAKASHITA, Takuya**
 **Tokyo 100-0011 (JP)**
• **OIKAWA, Shinji**
 **Tokyo 100-0011 (JP)**

(74) Representative: **Haseltine Lake Kempner LLP**
**One Portwall Square**
**Portwall Lane**
**Bristol BS1 6BH (GB)**

(54) **FERRITIC STAINLESS STEEL POWDER, FERRITIC STAINLESS STEEL MEMBER, AND METHOD FOR PRODUCING FERRITIC STAINLESS STEEL MEMBER**

(57)    Provided is a ferritic stainless steel powder with which a ferritic stainless steel component having excellent additive manufacturability and excellent oxidation resistance and corrosion resistance can be manufactured.

A ferritic stainless steel powder having a chemical composition including, in mass%, C: 0.003 to 0.200%, Si: 0.01 to 2.00%, Mn: 0.05 to 2.00%, P: 0.040% or less, S: 0.010% or less, Cr: 15.0 to 35.0%, Ni: 0.10 to 2.50%, Mo: 0.50 to 3.00%, Nb: 0.10% or greater and less than 0.70%, N: 0.030% or less, and O: 0.200% or less, with the balance being Fe and unavoidable impurities, the chemical composition satisfying inequality (1), shown below, wherein the ferritic stainless steel powder has a median diameter $D_{50}$ of 10 $\mu$m or greater and 200 $\mu$m or less and an apparent density of 3.5 Mg/m$^3$ or greater and 5.0 Mg/m$^3$ or less:

$$(Ni + Mo) \geq 2.00 \qquad (1)$$

## Description

Technical Field

The present invention relates to a ferritic stainless steel powder and, in particular, to a ferritic stainless steel powder suitable for the manufacture of a component that has a complex shape and is required to have excellent corrosion resistance, such as a heat exchanger. The present invention also relates to a ferritic stainless steel component manufactured with this ferritic stainless steel powder and to a method for manufacturing the ferritic stainless steel component.

Background Art

Metal additive manufacturing has been increasingly utilized in recent years. Presently, the most widely used additive manufacturing technique is the powder bed fusion method (also referred to as the powder bed process). The powder bed fusion method is a method of additive manufacturing that involves melting a metal powder that is a raw material by using a laser or an electron beam as a heat source.

The most remarkable feature of additive manufacturing is that it can manufacture a shaped object having a shape that cannot be provided by forming methods of the related art, and that the manufacturing can be accomplished in a way that even surface and internal structures are incorporated. Furthermore, the additive manufacturing method does not require consideration of the formability of the material and, therefore, can form any shape even when the method uses a Ni-based alloy, a Ti-based alloy, or the like, which, in the related art, are difficult to process and have limited options for product shapes.

In the field of aerospace and the field of medicine, industrial utilization of metal additive manufacturing is expanding to exploit the features. For example, in the case of components having a complex shape and required to have high heat resistance, such as turbine blades, manufacturing those components with a Ni alloy by using an additive manufacturing method has provided advantages, such as the optimization of the shape and a reduction in part count. Furthermore, in the field of medicine, the utilization of additive manufacturing is expanding because of advantages such as its ability to manufacture artificial joints and implants with shapes suitable for individual patients.

Presently, the application of additive manufacturing is limited to the fields of aerospace and medicine because additive manufacturing has low mass productivity and high manufacturing cost. However, it is believed that when these problems are solved, the application expands to fields where productivity and cost are considered to be important, such as the field of automobiles. In particular, in the field of automobiles, using the additive manufacturing method for the manufacture of exhaust system components or heat exchangers, which have complex shapes, may add value; for example, the optimization of the shape may be achieved, and the need for a joining operation, such as brazing or welding, may be eliminated, which may improve the overall strength of the component. Accordingly, attention is being paid to Fe-based alloys, such as stainless steels, as materials for use in additive manufacturing methods; Fe-based alloys are materials that are less expensive than Ni-based alloys and Ti-based alloys.

Patent Literature 1 to 6 disclose stainless steel powders for additive manufacturing.

Citation List

Patent Literature

PTL 1: International Publication No. 2019/139017
PTL 2: International Publication No. 2019/235014
PTL 3: International Publication No. 2020/110498
PTL 4: International Publication No. 2021/214958
PTL 5: Japanese Patent No. 6270563
PTL 6: Japanese Patent No. 6985940

Summary of Invention

Technical Problem

In recent years, regarding the conservation of the global environment, there has been a need for automobiles that have further improved fuel efficiency and in which purification of exhaust gases is enhanced. Consequently, the exhaust gases are increasingly becoming hotter, and the use of automotive heat exchangers, such as an exhaust heat recovery device and an exhaust gas recirculation (EGR) cooler, is expanding.

The exhaust heat recovery device is a device that improves fuel efficiency by, for example, warming engine coolant with the heat of exhaust gases to shorten the warm-up time for starting the engine. Typically, the exhaust heat recovery device is provided between a catalytic converter and a muffler and is made up of a heat exchanger portion, an entry-side pipe portion, and an exit-side pipe portion; the heat exchanger portion is a combination of a pipe, a plate, fins, a side plate, and the like. Exhaust gases enter the heat exchanger portion through the entry-side pipe. Then, the exhaust gases transfer their heat to coolant through a heat transfer surface of the fins or the like and are discharged through the exit-side pipe. Regarding the plates and fins that constitute the heat exchanger portion of the exhaust heat recovery device, their joining and assembly are accomplished mainly by brazing rather than welding.

The EGR cooler is a device for inhibiting the formation of nitrogen oxides ($NO_x$), which tend to be formed at a high temperature; the inhibition is achieved by recirculating exhaust gases having a low oxygen concentration to the intake side of the engine to reduce a combustion temperature of the fuel. When high-temperature exhaust gases are directly recirculated to the engine, the fuel combusts at an inappropriate time, which results in the generation of abnormal vibrations called "knocking". Accordingly, the EGR cooler is made up of a pipe for introducing a portion of exhaust gases, a heat exchanger for cooling the introduced exhaust gases, and a pipe for returning the cooled exhaust gases to the intake side of the engine. The temperature of exhaust gases is not less than 600°C at the entry side of the EGR cooler, and after the exhaust gases are cooled in the heat exchanger, the temperature is not greater than 100°C at the exit side. The heat exchanger portion of the EGR cooler is made up of thin plates overlapping in the form of fins, so as to enable weight reduction, size reduction, cost reduction, and/or the like. The joining and assembly of these are also accomplished mainly by brazing.

As described, various components of the exhaust heat recovery device and the EGR cooler are joined and assembled by brazing, and this has presented problems, which include sagging of a component during a brazing heat treatment at a high temperature. Furthermore, since these components are exposed to high-temperature exhaust gases, they need to have excellent oxidation resistance. In addition, exhaust gases contain not only $NO_x$ but also sulfur oxides ($SO_x$) and hydrocarbons (HC), and these condense to form highly corrosive acidic condensed water in the heat exchanger. Thus, the heat exchanger also needs to have excellent corrosion resistance. In particular, in the case where exhaust gases become hot and reach a temperature of 600°C or greater, Cr at grain boundaries may react with C and N to form Cr carbonitrides, which may result in the formation of a Cr-depletion layer, which has poor corrosion resistance, in a region surrounding the Cr carbonitrides; this is a phenomenon called sensitization and needs to be prevented to ensure corrosion resistance.

For the reasons described above, the heat exchanger portion of exhaust heat recovery devices and EGR coolers has been typically formed with an austenitic stainless steel such as SUS316L or SUS304L, in which a carbon content has been reduced to prevent sensitization. Unfortunately, austenitic stainless steels present the following problems: they contain a high amount of Ni and, therefore, are expensive; and because of their large thermal expansion, their thermal fatigue properties at high temperatures, which, specifically, are fatigue properties in a use environment in which a restraining force due to strong vibrations is exerted at high temperatures, are low. Accordingly, austenitic stainless steels are increasingly being replaced by ferritic stainless steels, such as SUS444 (18Cr-2Mo) and SUS430J1L (18Cr-Cu).

Stainless steel powders for additive manufacturing are disclosed in Patent Literature 1 to 6. Unfortunately, the materials disclosed in Patent Literature 1 to 6 do not have sufficient oxidation resistance and corrosion resistance that are required in cases where the powders are expected to be used in automotive exhaust system components, in particular, in the heat exchanger of an exhaust heat recovery device, an EGR cooler, or the like. Accordingly, there is a need for the development of a stainless steel powder that has the required properties. Another property required of components manufactured by additive manufacturing is excellent additive manufacturability; specifically, they need to be prevented from cracking even in a case where they experience a change in temperature unique to additive manufacturing, such as rapid solidification and rapid heating.

The present invention has been made in view of the above circumstances, and an object of the present invention is to provide a ferritic stainless steel powder with which a ferritic stainless steel component having excellent additive manufacturability and excellent oxidation resistance and corrosion resistance can be manufactured.

In the present invention, "excellent oxidation resistance" refers to cases where, after an oxidation test in which a test specimen is held in air at 600°C for 400 hours is performed, the test specimen has a weight gain by oxidation of 20 g/m$^2$ or less, and spalling of an oxide film thereof is not observed, where the test specimen is obtained by polishing a surface of a ferritic stainless steel component with #600 sandpaper.

Furthermore, in the present invention, "excellent corrosion resistance" refers to cases where a test specimen has a pitting potential Vc'10 of 200 mV or greater (vs SCE) as measured as follows: the test specimen is cut from a ferritic stainless steel component and has a size of 20 mm × 20 mm; in accordance with JIS G 0577:2014, a surface of the test specimen is polished with #600 sandpaper, then, the test specimen is covered with a seal material except for an 11 mm × 11 mm measurement surface, then, the test specimen is immersed in a 3.5 mass% NaCl solution at 30°C, and then, the measurement is performed.

Solution to Problem

The present inventors diligently conducted studies to achieve the object and found that excellent oxidation resistance and corrosion resistance can be achieved by increasing a Cr content to 15.0 mass% or greater, including Ni in an amount of 0.10 mass% or greater and Mo in an amount of 0.50 mass% or greater, and regulating the total content of Ni and Mo. In addition, by optimizing a chemical composition including these components and regulating the properties (particle size and apparent density) of a steel powder, it is possible to obtain a ferritic stainless steel powder with which a ferritic stainless steel component having excellent additive manufacturability and excellent oxidation resistance and corrosion resistance can be manufactured.

By producing the above-described ferritic stainless steel powder and performing additive manufacturing by using the powder as a material, it is possible to obtain a complex-shaped ferritic stainless steel component having very good properties.

In particular, having not only excellent oxidation resistance but also higher corrosion resistance than SUS430J1L is desirable in terms of application to the EGR cooler. More specifically, it is desirable that the pitting potential Vc'10 be 200 mV or greater (vs SCE).

The present invention was completed based on the above-described findings and with further studies that were conducted. A summary of the present invention is as follows.

[1] A ferritic stainless steel powder having a chemical composition including, in mass%:

C: 0.003 to 0.200%,
Si: 0.01 to 2.00%,
Mn: 0.05 to 2.00%,
P: 0.040% or less,
S: 0.010% or less,
Cr: 15.0 to 35.0%,
Ni: 0.10 to 2.50%,
Mo: 0.50 to 3.00%,
Nb: 0.10% or greater and less than 0.70%,
N: 0.030% or less, and
O: 0.200% or less, with the balance being Fe and unavoidable impurities, the chemical composition satisfying inequality (1), shown below, wherein,
the ferritic stainless steel powder has a median diameter $D_{50}$ of 10 $\mu$m or greater and 200 $\mu$m or less and an apparent density of 3.5 Mg/m$^3$ or greater and 5.0 Mg/m$^3$ or less:

$$(Ni + Mo) \geq 2.00 \qquad (1)$$

where Ni and Mo in equation (1) are the content (mass%) of Ni and the content (mass%) of Mo, respectively.

[2] The ferritic stainless steel powder according to [1], wherein the chemical composition further contains, in mass%, one or more selected from

Al: 0.30% or less,
Ti: 0.30% or less,
V: 0.50% or less,
Zr: 0.50% or less,
Cu: 1.00% or less,
Co: 0.50% or less,
B: 0.0100% or less,
Ca: 0.0100% or less,
Mg: 0.0050% or less,
REM: 0.50% or less,
Sn: 0.50% or less, and
Sb: 0.50% or less.

[3] A ferritic stainless steel component having a chemical composition including, in mass%:

C: 0.003 to 0.200%
Si: 0.01 to 2.00%
Mn: 0.05 to 2.00%
P: 0.040% or less
S: 0.010% or less
Cr: 15.0 to 35.0%
Ni: 0.10 to 2.50%
Mo: 0.50 to 3.00%
Nb: 0.10% or greater and less than 0.70%,
N: 0.030% or less, and
O: 0.200% or less, with the balance being Fe and unavoidable impurities, the chemical composition satisfying inequality (1), shown below, wherein
the ferritic stainless steel component has a number $N_{MnS}$ of MnS particles per unit area that satisfies inequality (2), shown below:

$$(Ni + Mo) \geq 2.00 \qquad (1)$$

$$N_{MnS} \leq 100/mm^2 \qquad (2)$$

where Ni and Mo in equation (1) are the content (mass%) of Ni and the content (mass%) of Mo, respectively.

[4] The ferritic stainless steel component according to [3], wherein the chemical composition further contains, in mass%, one or more selected from

Al: 0.30% or less,
Ti: 0.30% or less,
V: 0.50% or less,
Zr: 0.50% or less,
Cu: 1.00% or less,
Co: 0.50% or less,
B: 0.0100% or less,
Ca: 0.0100% or less,
Mg: 0.0050% or less,
REM: 0.50% or less,
Sn: 0.50% or less, and
Sb: 0.50% or less.

[5] A method for manufacturing a ferritic stainless steel component, the method including manufacturing the ferritic stainless steel component with the ferritic stainless steel powder according to [1] or [2], by using an additive manufacturing method.

Advantageous Effects of Invention

The present invention can provide a ferritic stainless steel powder with which a ferritic stainless steel component having excellent additive manufacturability and excellent oxidation resistance and corrosion resistance can be manufactured.

The present invention can provide a ferritic stainless steel powder suitable for use in the manufacture of a ferritic stainless steel component, in particular, in the manufacture of a ferritic stainless steel component that uses an additive manufacturing method. The ferritic stainless steel powder of the present invention is suitable as a material of a ferritic stainless steel component having a complex shape and required to have excellent oxidation resistance and corrosion resistance, such as automotive exhaust system components and heat exchangers. In particular, the ferritic stainless steel powder is suitable as a material for manufacturing the foregoing ferritic stainless steel components with an additive manufacturing method.

Furthermore, ferritic stainless steel components manufactured with the ferritic stainless steel powder of the present invention have excellent oxidation resistance and corrosion resistance. In addition, the occurrence of cracking due to a rapid temperature change during additive manufacturing is prevented, and thus, excellent additive manufacturability is achieved. The ferritic stainless steel component obtained in accordance with the present invention is particularly suitable as a component having a complex shape and required to have oxidation resistance and corrosion resistance, such as an automotive exhaust system component or heat exchanger.

Description of Embodiments

The present invention will be described with reference to the embodiments below.

First, a chemical composition of a ferritic stainless steel powder (hereinafter also referred to simply as a "stainless steel powder") and a ferritic stainless steel component (hereinafter also referred to simply as a "stainless steel component") of the present invention will be described. The unit used in the chemical composition is "mass%" in all cases and is simply expressed as "%" below unless otherwise specified.

C: 0.003 to 0.200%

C has an effect of increasing the strength of steel by forming carbides with elements such as Nb. C is to be present in an amount of 0.003% or greater so that sufficient strength can be achieved. Preferably, a C content is 0.030% or greater. On the other hand, when the C content is greater than 0.200%, the steel becomes excessively hard, which results in reduced toughness of the stainless steel component. In addition, when the C content is greater than 0.200%, solidification cracking is likely to occur during additive manufacturing; that is, additive manufacturability is reduced. Accordingly, the C content is to be 0.200% or less. The C content is preferably 0.150% or less and more preferably 0.100% or less.

Si: 0.01 to 2.00%

Si has an effect of improving the oxidation resistance of steel. In order for this effect to be achieved, a Si content is to be 0.01% or greater. Preferably, the Si content is 0.25% or greater. However, when the Si content is greater than 2.00%, the steel becomes excessively hard, which results in reduced toughness. Accordingly, the Si content is to be 2.00% or less. The Si content is preferably 1.50% or less and more preferably 1.00% or less.

Mn: 0.05 to 2.00%

Mn has effects of reducing an oxidation rate and preventing the spalling of scales. In order for these effects to be achieved, a Mn content is to be 0.05% or greater. Preferably, the Mn content is 0.25% or greater. However, since Mn is an austenite-phase-forming element, when the Mn content is greater than 2.00%, an austenite phase is formed, which results in reduced oxidation resistance. Accordingly, the Mn content is to be 2.00% or less. The Mn content is preferably 1.50% or less and more preferably 1.00% or less.

P: 0.040% or less

Since P is an element that reduces corrosion resistance, it is desirable to reduce an amount of P. The upper limit of a P content is to be 0.040%. The P content is preferably 0.030% or less, more preferably 0.020% or less, and even more preferably 0.010% or less. The lower limit of the P content is not particularly limited. However, since excessive dephosphorization results in an increase in cost, it is preferable that the P content be 0.005% or greater.

S: 0.010% or less

Since S is an element that reduces corrosion resistance, it is desirable to reduce an amount of S. The upper limit of a S content is to be 0.010%. The S content is preferably 0.005% or less and more preferably 0.003% or less. The lower limit of the S content is not particularly limited. However, since excessive desulfurization results in an increase in cost, it is preferable that the S content be 0.0005% or greater.

Cr: 15.0 to 35.0%

Cr is an important element that improves the corrosion resistance and oxidation resistance of steel. Achieving the corrosion resistance and oxidation resistance that have been set as goals requires a Cr content of 15.0% or greater. However, when the Cr content is greater than 35.0%, the toughness of the stainless steel component is reduced. Accordingly, the Cr content is to be within a range of 15.0 to 35.0%. The Cr content is preferably 18.0% or greater and more preferably 20.0% or greater. Furthermore, the Cr content is preferably 32.0% or less, more preferably 30.0% or less, and even more preferably 28.0% or less.

Ni: 0.10 to 2.50%

Ni has an effect of improving the corrosion resistance of the stainless steel component. In order for this effect to be achieved, a Ni content is to be 0.10% or greater. The Ni content is preferably 0.20% or greater and more preferably 0.50% or greater. However, Ni is an element that promotes the formation of an austenite phase. When the Ni content is greater than 2.50%, an austenite phase is formed, which results in reduced oxidation resistance. Accordingly, the Ni content is to be 2.50% or less. The Ni content is preferably 2.30% or less.

Mo: 0.50 to 3.00%

Mo stabilizes the passivation film of stainless steel, thereby improving its corrosion resistance and oxidation resistance. This effect can be achieved when a Mo content is 0.50% or greater. However, when the Mo content is greater than 3.00%, an intermetallic compound precipitates, which results in reduced toughness. Accordingly, the Mo content is to be within a range of 0.50 to 3.00%. The Mo content is preferably 1.25% or greater, more preferably 1.50% or greater, and even more preferably 1.80% or greater. Furthermore, the Mo content is preferably 2.50% or less and more preferably 2.00% or less.

Nb: 0.10% or greater and less than 0.70%

Nb is a solid solution strengthening element and thus has an effect of increasing the high-temperature proof stress of steel. In addition, Nb has an effect of increasing the high-temperature proof stress of steel by forming a carbide and a nitride with C or N present in the steel. These effects can be achieved when a Nb content is 0.10% or greater. However, when the Nb content is 0.70% or greater, an intermetallic compound phase is formed, which results in reduced toughness of the stainless steel component. Accordingly, the Nb content is to be within a range of 0.10% or greater and less than 0.70%. The Nb content is preferably 0.20% or greater and more preferably 0.30% or greater. Furthermore, the Nb content is preferably 0.60% or less, more preferably 0.50% or less, and even more preferably 0.40% or less.

N: 0.030% or less

N is a solid solution strengthening element and thus has an effect of increasing the high-temperature proof stress of steel. In addition, N has an effect of increasing the strength of steel by forming nitrides with elements such as Nb. In order for these effects to be achieved, it is preferable that a N content be 0.0030% or greater. More preferably, the N content is 0.0050% or greater. On the other hand, when the N content is greater than 0.030%, solidification cracking is likely to occur during additive manufacturing; that is, additive manufacturability is reduced. Accordingly, the N content is to be 0.030% or less. The N content is preferably 0.020% or less.

O: 0.200% or less

The stainless steel powder of the present invention can be produced by a gas atomization method or a water atomization method. Note that metal powders produced by these methods are likely to experience unintentional incorporation of O. In order for the amount of oxide-based inclusions that are formed in a shaped object to be reduced, an O content is to be 0.200% or less. The O content is preferably 0.070% or less and more preferably 0.050% or less. However, since excessive deoxidization results in an increase in cost, it is preferable that the O content be 0.020% or greater.

$$(Ni + Mo) \geq 2.00 \qquad (1)$$

Ni and Mo in inequality (1) are the content (mass%) of Ni and the content (mass%) of Mo, respectively.

Ni and Mo have an effect of increasing corrosion resistance by dissolving into the matrix phase. In order for this effect to be achieved, one or two of Ni and Mo need to be included in a total amount of 2.00% or greater. That is, inequality (1), shown above, needs to be satisfied. Preferably, the total content of one or two of Ni and Mo is 3.00% or greater. Furthermore, the total content is to be 5.50% or less and is preferably 4.80% or less and more preferably 4.30% or less.

The ferritic stainless steel powder and the stainless steel component of the present invention have a chemical composition containing the above-described components, with the balance being Fe and unavoidable impurities.

The stainless steel powder and the stainless steel component of the present invention may further contain, in addition to the components described above, one or more selected from Al: 0.30% or less, Ti: 0.30% or less, V: 0.50% or less, Zr: 0.50% or less, Cu: 1.00% or less, Co: 0.50% or less, B: 0.0100% or less, Ca: 0.0100% or less, Mg: 0.0050% or less, REM: 0.50% or less, Sn: 0.50% or less, and Sb: 0.50% or less.

Al: 0.30% or less

Al has an effect of significantly increasing the oxidation resistance of steel by forming an Al oxide film on a surface. In order for this effect to be achieved, it is preferable that an Al content be 0.03% or greater. However, when the Al content is greater than 0.30%, the toughness of the stainless steel component is reduced. Accordingly, in the case where Al is included, the Al content is to be 0.30% or less.

Ti: 0.30% or less

Ti has an effect of increasing the strength of steel by forming a carbide and a nitride with C or N present in the steel. In order for this effect to be achieved, it is preferable that a Ti content be 0.01% or greater. However, when the Ti content is greater than 0.30%, the steel becomes excessively hard, which results in reduced toughness of the stainless steel component. Accordingly, in the case where Ti is included, the Ti content is to be within a range of 0.30% and less. Preferably, the Ti content is 0.20% or less.

V: 0.50% or less

V has an effect of increasing the strength of steel by forming a carbide and a nitride with C or N present in the steel. In order for this effect to be achieved, it is preferable that a V content be 0.01% or greater. However, when the V content is greater than 0.50%, the steel becomes excessively hard, which results in reduced toughness of the stainless steel component. Accordingly, in the case where V is included, the V content is to be within a range of 0.50% and less. Preferably, the V content is 0.30% or less.

Zr: 0.50% or less

Zr has an effect of improving oxidation resistance by improving the adhesion of an oxide film. In order for this effect to be achieved, it is preferable that a Zr content be 0.01% or greater. However, when the Zr content is greater than 0.50%, an intermetallic compound phase precipitates, which actually results in reduced oxidation resistance. Accordingly, in the case where Zr is included, the Zr content is to be within a range of 0.50% and less. The Zr content is preferably 0.30% or less and more preferably 0.10% or less.

Cu: 1.00% or less

Cu is an element that increases corrosion resistance. In order for this effect to be achieved, it is preferable that a Cu content be 0.01% or greater. However, when the Cu content is greater than 1.00%, the steel becomes excessively hard, which results in reduced toughness of the stainless steel component. Accordingly, in the case where Cu is included, the Cu content is to be 1.00% or less. The Cu content is preferably 0.80% or less and more preferably 0.50% or less.

Co: 0.50% or less

Co is an element that improves the toughness of the stainless steel component. In order for this effect to be achieved, it is preferable that a Co content be 0.01% or greater. However, when the Co content is greater than 0.50%, the steel becomes excessively hard, which actually results in reduced toughness. Accordingly, in the case where Co is included, the Co content is to be within a range of 0.50% and less.

B: 0.0100% or less

B has an effect of improving toughness by strengthening grain boundaries. In order for this effect to be achieved, it is preferable that a B content be 0.0002% or greater. However, when the B content is greater than 0.0100%, the steel becomes excessively hard, which actually results in reduced toughness of the stainless steel component. Accordingly, in the case where B is included, the B content is to be within a range of 0.0100% and less. The B content is more preferably 0.0005% or greater. Furthermore, the B content is preferably 0.0050% or less.

Ca: 0.0100% or less

Ca has an effect of lowering the melting point of oxide-based inclusions and, therefore, reducing the amount of inclusions in molten steel when metal powders are produced. In order for this effect to be achieved, it is preferable that a Ca content be 0.0002% or greater. However, when the Ca content is greater than 0.0100%, the toughness of the stainless steel component is reduced. Accordingly, in the case where Ca is included, the Ca content is to be within a range of 0.0100% and less. The Ca content is more preferably 0.0005% or greater. Furthermore, the Ca content is preferably 0.0050% or less and more preferably 0.0030% or less.

Mg: 0.0050% or less

Mg is an element that has an effect of improving corrosion resistance. This effect can be achieved when Mg is present in an amount of 0.0002% or greater. Accordingly, in the case where Mg is included, a Mg content is preferably within a range of 0.0002% and greater. However, when the Mg content is greater than 0.0050%, the toughness of the stainless steel component is reduced. Accordingly, in the case where Mg is included, the Mg content is to be within a range of 0.0050% and less. The Mg content is more preferably 0.0005% or greater. Furthermore, the Mg content is preferably 0.0035% or less and more preferably 0.0020% or less.

REM: 0.50% or less

Rare earth metals (REM) have an effect of improving oxidation resistance by improving the adhesion of an oxide film. In order for this effect to be achieved, it is preferable that a REM content be 0.01% or greater. However, when the REM content is greater than 0.50%, the toughness of the stainless steel component is reduced. Accordingly, in the case where one or more REMs are included, the REM content is to be within a range of 0.50% and less. The REM content is more preferably 0.05% or greater and even more preferably 0.10% or greater. Furthermore, the REM content is preferably 0.30% or less and more preferably 0.20% or less. The "REM" is a generic term that refers to Sc, Y, and 15 elements ranging from lanthanum (La, atomic number 57) to lutetium (Lu, atomic number 71), and the "REM content" as referred to herein is a total content of these elements.

Sn: 0.50% or less

Sn has an effect of preventing surface deterioration of a shaped object that may occur when the surface is polished. In order for this effect to be achieved, it is preferable that a Sn content be 0.01% or greater. However, when the Sn content is greater than 0.50%, solidification cracking is likely to occur; that is, additive manufacturability is reduced. Accordingly, in the case where Sn is included, the Sn content is to be within a range of 0.50% and less. The Sn content is more preferably 0.03% or greater and even more preferably 0.05% or greater. Furthermore, the Sn content is preferably 0.30% or less and more preferably 0.10% or less.

Sb: 0.50% or less

Sb has an effect of preventing surface deterioration of a shaped object that may occur when the surface is polished. In order for this effect to be achieved, it is preferable that an Sb content be 0.01% or greater. However, when the Sb content is greater than 0.50%, solidification cracking is likely to occur; that is, additive manufacturability is reduced. Accordingly, in the case where Sb is included, the Sb content is to be within a range of 0.50% and less. The Sb content is more preferably 0.03% or greater and even more preferably 0.05% or greater. Furthermore, the Sb content is preferably 0.30% or less and more preferably 0.10% or less.

Now, the properties (particle size and apparent density) of the stainless steel powder of the present invention will be described.

The stainless steel powder of the present invention has a volume-based median diameter $D_{50}$ of 10 $\mu$m or greater and 200 $\mu$m or less. Furthermore, the stainless steel powder has an apparent density of 3.5 Mg/m$^3$ or greater and 5.0 Mg/m$^3$ or less.

Median Diameter $D_{50}$: 10 $\mu$m or Greater and 200 $\mu$m or Less

The stainless steel powder of the present invention has a volume-based median diameter $D_{50}$ of 10 $\mu$m or greater and 200 $\mu$m or less. When the median diameter $D_{50}$ of the stainless steel powder is excessively small, the powder has reduced flowability, which leads to uneven feeding of the powder, and this can cause the formation of defects, such as voids, during additive manufacturing. As a result, a steel component manufactured with the steel powder being used as a raw material may have reduced strength, low-temperature toughness, and corrosion resistance. When the median diameter $D_{50}$ of the stainless steel powder is 10 $\mu$m or greater, the formation of defects, such as voids, during additive manufacturing is likely to be inhibited. Accordingly, the median diameter $D_{50}$ of the stainless steel powder is to be 10 $\mu$m or greater. The median diameter $D_{50}$ of the stainless steel powder is preferably 20 $\mu$m or greater and more preferably 30 $\mu$m or greater. On the other hand, when the median diameter $D_{50}$ of the stainless steel powder is excessively large, the formation of defects, such as voids, can be caused during additive manufacturing. As a result, a steel component manufactured with the steel powder being used as a raw material may have reduced strength, low-temperature toughness, and corrosion resistance due to the defects. When the median diameter $D_{50}$ of the stainless steel powder is 200 $\mu$m or less, the formation of defects, such as voids, during additive manufacturing is likely to be inhibited. Accordingly, the median diameter $D_{50}$ of the stainless steel powder is to be 200 $\mu$m or less. The median diameter $D_{50}$ of the stainless steel powder is preferably 150 $\mu$m or less, more preferably 100 $\mu$m or less, and even more preferably 50 $\mu$m or less.

The median diameter $D_{50}$ of the stainless steel powder is a median diameter (50% particle diameter) of a cumulative volume particle size distribution of the stainless steel powder. The median diameter of the stainless steel powder can be measured with a laser diffraction particle size analyzer. In the present invention, the median diameter $D_{50}$ of the stainless steel powder is measured with the method described next.

Examples of laser diffraction particle size analyzers include LA-950 V2, manufactured by HORIBA, Ltd. Of course, a different instrument may be used. To perform the measurement accurately, it is preferable to use an instrument having a measurable particle size range of 0.1 $\mu$m or less, as the lower limit, and 200 $\mu$m or greater, as the upper limit. The laser diffraction particle size analyzer is used as follows: laser light is projected onto a solvent in which the stainless steel powder is dispersed, and, from the diffraction and scattering intensity of the laser light, the particle size distribution and the average particle size (median diameter) of the stainless steel powder are measured. Preferably, the solvent in which the stainless steel powder is to be dispersed is ethanol because ethanol allows the powder to exhibit good dispersibility and is easy to handle. When a solvent that has strong van der Waals forces and in which dispersibility is low, such as water, is used, the powder may agglomerate during the measurement, and the measurement result may be larger than the actual average particle size; therefore, such a solvent is not preferable. Accordingly, it is preferable that, before the measurement, an ultrasonic dispersing treatment be performed on an ethanol solution containing the stainless steel powder.

The appropriate time period for the dispersing treatment varies among stainless steel powders that are to be measured, and, therefore, the dispersing treatment is to be performed for seven different time periods with increments of 10 minutes, ranging from 0 to 60 minutes. After each of the dispersing treatments, the measurements of the particle size distribution and the average particle size (median diameter) of the stainless steel powder are performed. During each of the measurements, the solvent is stirred for the measurement so that agglomeration of the stainless steel powder can be prevented. Among the average particle sizes (median diameters) obtained from the seven runs of measurements performed with the different time periods for the dispersing treatment with increments of 10 minutes, the minimum value is used as the median diameter $D_{50}$ of the stainless steel powder of the present invention.

In addition, the stainless steel powder of the present invention, which has the controlled median diameter $D_{50}$ as described above, has an apparent density that is controlled to be a high value. Since both the median diameter $D_{50}$ and the apparent density of the stainless steel powder are controlled, a higher level of additive manufacturability can be achieved. The apparent density is to be 3.5 Mg/m$^3$ or greater. When the apparent density is less than 3.5 Mg/m$^3$, flowability may be reduced, which may cause the formation of defects, such as voids, during additive manufacturing. Preferably, the apparent density is to be 4.0 Mg/m$^3$ or greater. Furthermore, the apparent density of the stainless steel powder is to be 5.0 Mg/m$^3$ or less. This is because when the apparent density is greater than 5.0 Mg/m$^3$, it may become difficult, from an industrial standpoint, to stably achieve the control of the apparent density.

The value of the apparent density to be used is a value measured by a test method specified in JIS Z 2504:2020.

Now, a property (the number of MnS particles per unit area) of the stainless steel component of the present invention will be described.

The stainless steel component of the present invention has a number $N_{MnS}$ of MnS particles per unit area that satisfies inequality (2), shown below.

$$N_{MnS} \leq 100/mm^2 \qquad (2)$$

In steel microstructures of the stainless steel component of the present invention, the number ($N_{MnS}$) of MnS particles per unit area is 100/mm$^2$ or fewer. MnS is an inclusion formed of Mn and S and can be a starting point of corrosion. Accordingly, the fewer the number of MnS particles, the greater the degree of improvement in corrosion resistance. The present inventors found that stainless steel components manufactured by the additive manufacturing method (additively manufactured shaped objects) have better corrosion resistance than those manufactured by subjecting a steel sheet to a forming operation, even when both the steel components have the same chemical composition. Although the reason for this is not clear, it can be assumed that in the case of additively manufactured shaped objects, MnS is unlikely to precipitate during cooling because of rapid solidification, which is unique to additive manufacturing, and that consequently, the $N_{MnS}$ in the steel microstructures is reduced. As a result of more detailed studies that were conducted, it was found that when the $N_{MnS}$ is 100/mm$^2$ or fewer, excellent corrosion resistance can be achieved. The $N_{MnS}$ is more preferably 50/mm$^2$ or fewer and even more preferably 30/mm$^2$ or fewer. The lower limit of the $N_{MnS}$ is not particularly limited, and the $N_{MnS}$ may be 0/mm$^2$.

The number $N_{MnS}$ of MnS particles per unit area of the stainless steel component is measured in the following manner. A test specimen is cut such that a surface perpendicular to a height (stacking) direction of the stainless steel component can be an observation surface. Then, the test specimen is embedded in a resin and mirror-polished. The observation surface may be a surface located at a 1/2 position with respect to the height of the stainless steel component. A 1.0 mm$^2$ region of the observation surface that has been mirror-polished is observed by SEM-EDX (Scanning Electron Microscope-Energy Dispersive X-ray Spectrometry), and the number of MnS particles is counted, where the MnS is defined as an inclusion containing Mn and S, each in an amount of 25 at.% or greater, and having a particle size (maximum size) of 0.05 $\mu$m or greater. The reason for specifying the particle size of the inclusion of 0.05 $\mu$m or greater is that when the particle size is 0.05 $\mu$m or greater, the inclusion is detrimental to corrosion resistance while inclusions with a particle size of less than 0.05 $\mu$m do not affect the corrosion resistance. Regarding the SEM-EDX observation, the number of fields of view is three, and an average of the numbers of MnS particles of the three fields of view is used as the number $N_{MnS}$ of MnS particles per unit area (mm$^2$) of the sample.

Now, a preferred embodiment of a method for producing the stainless steel powder of the present invention will be described.

The stainless steel powder of the present invention, as a final form of a material, is provided by the following series of production steps. Various steps, including, for example, melting, formation of an ingot, remelting of the master ingot, and production of the powder by an atomization process, are performed to produce the stainless steel powder of the present invention.

First, the steps of melting and formation of an ingot are performed as follows: predetermined amounts of the above-described elements, which serve as materials, are melted and alloyed in a high-frequency vacuum melting furnace, and then, the melt is cast to form an ingot (master ingot). In these processes, it is preferable that the melting be performed under conditions including a reduced-pressure Ar atmosphere and a melting temperature of 1600°C or greater. The reason for selecting these conditions is as follows. When the melting temperature is excessively low, the molten steel solidifies during the teeming of the molten steel through a nozzle, which results in clogging of the nozzle. In addition, it is desirable, from the standpoint of preventing the oxidation of the molten steel, that the melting be performed in a reduced-pressure Ar atmosphere. The melting furnace used in these steps is not limited to the high-frequency vacuum melting furnace. In the present invention, a different melting furnace (e.g., a direct Joule-heating melting furnace) may be used.

Next, the steps of remelting of the master ingot and an atomization process are performed as follows: the cast master ingot, which is used as a material, is remelted in a melting furnace, such as a high-frequency furnace or an induction furnace, and then, the melt is subjected to a gas atomization process that uses Ar or He, which is an inert gas, to give a low-oxygen stainless steel powder.

Subsequently, the stainless steel powder is subjected to size classification such that the above-described median diameter $D_{50}$ and apparent density are achieved, and the resultant is provided as the stainless steel powder of the present invention. The size classification may be performed with a sieve or with another technique, such as air classification. Furthermore, the gas atomization process may be replaced by a water atomization process.

Now, an embodiment of a method for manufacturing the stainless steel component of the present invention will be described.

A stainless steel additively manufactured shaped object (three-dimensional structure) is manufactured with the above-described stainless steel powder of the present invention being used as a material, by performing, for example, an additive manufacturing method (metal powder additive manufacturing method). The additive manufacturing method may be, for example, a 3D printer method. In this embodiment, a laser-type powder bed 3D printer is used. The conditions set for the 3D printer are not particularly limited. For the 3D printer, a laser output of 150 to 300 W and a scan speed of 700 to 1100 mm/s, for example, are preferred from the standpoint of preventing excessive melting or insufficient melting. Next, the shaped object is heat-treated when necessary, to provide the stainless steel component of the present invention. This heat treatment step involves holding in a temperature range of 850 to 1200°C for 1 minute or more and natural cooling that follows. Preferably, the temperature range and the time for the holding before natural cooling are 1000 to 1200°C and 10 minutes or more.

EXAMPLES

The present invention will now be described with reference to Examples. First, raw material powders each having the chemical composition shown in Table 1 were produced with a gas atomization process. Subsequently, size classification was performed to give stainless steel powders adjusted to have an apparent density of 3.4 to 4.7 Mg/m$^3$ and a volume-based median diameter $D_{50}$ of 21 to 220 $\mu$m. With these powders being used as materials, stainless steel components were manufactured with a powder bed process. The additive manufacturing apparatus used was an M290, manufactured by EOS GmbH. The heat source for melting the stainless steel powders was a laser, and additive manufacturing was performed under conditions including a scan speed of 800 mm/s, an output of 200 W, and a powder layer thickness of 40 $\mu$m per layer. The shaped objects had a plate shape with a width of 35 mm, a length of 180 mm, and a height in a stacking direction (thickness) of 4 mm. The shaped objects were each subjected to a heat treatment in which the shaped object was held in air at 1000°C for 1 hour and then naturally cooled. Subsequently, test specimens were cut to be used in various tests, described below, with which property evaluations were performed. Note that test specimens rated as × in the evaluation of additive manufacturability, described below, were not subjected to the subsequent property evaluations. No. 41 is a cold rolled annealed steel sheet with a thickness of 2 mm, which was manufactured by a conventional process including small steel ingot making, hot rolling, hot band annealing, cold rolling, and cold band annealing. No. 41 had a chemical composition that was substantially the same as that of No. 1. An annealing temperature for the hot band annealing was 1000°C, and an annealing temperature for the cold band annealing was 900°C. This cold rolled annealed steel sheet was used as a comparative material and evaluated for corrosion resistance and oxidation resistance, described below. Furthermore, regarding the stainless steel components of Nos. 1 to 41, the number $N_{MnS}$ of MnS particles per unit area was measured in the manner described above. The steel microstructure observation surface was a surface located at a 1/2 position with respect to the height in the stacking direction, for Nos. 1 to 40, and a surface at a thickness-wise middle portion for No. 41. The results are shown in Table 2.

(1) Additive Manufacturability

The additive manufacturability was evaluated based on whether the additively manufactured stainless steel component had a crack. First, surfaces (two surfaces having the largest area) of the heat-treated shaped objects were each ground such that the thickness was reduced by 1 mm. Penetrant testing was performed on the ground surfaces in accordance with the method described in JIS Z2343-1:2017, to detect whether there was a crack. In cases where no cracks with a length of 1.0 mm or greater were observed, a rating of "o" was given, and in cases where a crack with a length of 1.0 mm or greater was observed, a rating of "×" was given; it was determined that "o" indicated excellent additive manufacturability.

(2) Corrosion Resistance

For Nos. 1 to 40, 20 mm × 20 mm test specimens were cut from the heat-treated shaped objects, and for No. 41, a 20 mm × 20 mm test specimen was cut from the steel sheet. In accordance with JIS G 0577:2014, a surface of each of the test specimens was polished with #600 sandpaper, then, the test specimen was covered with a seal material except for an 11 mm × 11 mm measurement surface, and then, the test specimen was immersed in a 3.5 mass% NaCl solution at 30°C. Then, the test specimen was held at a corrosion potential for 10 minutes. Subsequently, the potential was swept to 1.1 mA/cm$^2$ at a sweep rate of 20 mV/min, and the pitting potential Vc'10 was determined as the potential at which a current density of 10 $\mu$A/cm$^2$ was reached. Regarding the measurement results of the pitting potential, a rating of "×" was given in cases where Vc'10 was less than 200 mV (vs SCE), a rating of "o" was given in cases where Vc'10 was 200 mV or greater (vs SCE) and less than 400 mV (vs SCE), and a rating of "◎" was given in cases where Vc'10 was 400 mV or greater (vs SCE); it was determined that "o" and "◎" indicated excellent corrosion resistance.

(3) Oxidation Resistance

The oxidation resistance was evaluated by performing an oxidation test. For Nos. 1 to 40, surfaces (two surfaces having the largest area) of the heat-treated shaped objects were each ground such that the thickness was reduced by 1 mm. Accordingly, plate-shaped test specimens having a thickness of 2 mm were obtained. From these test specimens, oxidation test specimens with a size of 20 mm × 30 mm × 2.0 mm were cut. For No. 41, surfaces (two surfaces having the largest area) of the steel sheet were each ground such that the thickness was reduced by 0.1 mm. Accordingly, a plate-shaped test specimen having a thickness of 1.8 mm was obtained. From this test specimen, an oxidation test specimen with a size of 20 mm × 30 mm × 1.8 mm was cut. Subsequently, the surfaces of these test specimens were polished with #600 sandpaper to give oxidation test specimens. An oxidation test was conducted in which the test specimens were held in air at a high temperature for 400 hours, to evaluate the oxidation resistance. The test was conducted at two temperatures, namely, 600°C and 800°C. After the oxidation test, in cases where the test specimen had a weight gain by oxidation of greater than 20 g/m$^2$, or spalling of the oxide film on the surface thereof was observed, a rating of "fail" was given; and in cases where the test specimen had a weight gain by oxidation of 20 g/m$^2$ or less, and spalling of the oxide film was not observed, a rating of "pass" was given. Regarding the oxidation resistance, in cases where both the test at 600°C and the test at 800°C had the result of "fail", a rating of "×" was given; in cases where the test at 600°C had the result of "pass", but the test at 800°C had the result of "fail", a rating of "o" was given; and in cases where both the test at 600°C and the test at 800°C had the result of "pass", a rating of "◎" was given. It was determined that "o" and "◎" indicated excellent oxidation resistance.

[Table 1]

| No. | Steel Powder Symbol | Chemical Composition (mass%) | | | | | | | | | | | | | D$_{50}$ ($\mu$m) | Apparent Density (Mg/m$^3$) | Notes |
|---|---|---|---|---|---|---|---|---|---|---|---|---|---|---|---|---|---|
| | | C | Si | Mn | P | S | Cr | Ni | Mo | Nb | N | O | Ni+Mo | Others | | | |
| 1 | A1 | 0.032 | 0.68 | 0.21 | 0.008 | 0.003 | 25.1 | 2.06 | 1.88 | 0.33 | 0.018 | 0.049 | 3.94 | | 33 | 3.9 | Invention Example |
| 2 | A2 | 0.005 | 0.45 | 0.14 | 0.009 | 0.006 | 18.8 | 0.31 | 1.91 | 0.36 | 0.016 | 0.068 | 2.22 | | 32 | 4.1 | Invention Example |
| 3 | A3 | 0.080 | 0.72 | 0.16 | 0.008 | 0.003 | 34.2 | 1.93 | 1.90 | 0.37 | 0.016 | 0.069 | 3.83 | | 29 | 4.5 | Invention Example |
| 4 | A4 | 0.080 | 0.82 | 0.25 | 0.008 | 0.003 | 25.2 | 2.41 | 1.87 | 0.38 | 0.017 | 0.053 | 4.28 | | 36 | 4.7 | Invention Example |
| 5 | A5 | 0.006 | 0.65 | 0.13 | 0.008 | 0.004 | 24.8 | 2.05 | 2.92 | 0.34 | 0.018 | 0.056 | 4.97 | | 21 | 3.8 | Invention Example |
| 6 | A6 | 0.070 | 1.82 | 0.12 | 0.006 | 0.004 | 25.6 | 2.08 | 1.89 | 0.33 | 0.019 | 0.071 | 3.97 | | 40 | 4.6 | Invention Example |
| 7 | A7 | 0.009 | 0.82 | 1.87 | 0.008 | 0.003 | 25.3 | 2.02 | 1.93 | 0.32 | 0.018 | 0.068 | 3.95 | | 22 | 3.8 | Invention Example |
| 8 | A8 | 0.080 | 0.63 | 0.13 | 0.008 | 0.003 | 25.1 | 1.97 | 1.94 | 0.69 | 0.018 | 0.068 | 3.91 | | 22 | 4.0 | Invention Example |
| 9 | A9 | 0.180 | 0.44 | 0.29 | 0.009 | 0.005 | 24.9 | 2.10 | 1.95 | 0.35 | 0.019 | 0.048 | 4.05 | | 27 | 4.3 | Invention Example |
| 10 | A10 | 0.090 | 0.46 | 0.41 | 0.009 | 0.006 | 24.7 | 1.80 | 1.89 | 0.29 | 0.028 | 0.053 | 3.69 | | 36 | 4.3 | Invention Example |
| 11 | A11 | 0.060 | 0.82 | 0.15 | 0.008 | 0.004 | 25.3 | 2.20 | 1.88 | 0.32 | 0.017 | 0.092 | 4.08 | | 34 | 4.6 | Invention Example |
| 12 | A12 | 0.100 | 0.43 | 0.20 | 0.008 | 0.005 | 15.6 | 1.80 | 1.86 | 0.35 | 0.018 | 0.053 | 3.66 | | 35 | 4.4 | Invention Example |
| 13 | A13 | 0.080 | 0.85 | 0.31 | 0.008 | 0.006 | 24.9 | 0.21 | 1.99 | 0.31 | 0.019 | 0.056 | 2.20 | | 31 | 4.1 | Invention Example |
| 14 | A14 | 0.070 | 0.49 | 0.16 | 0.009 | 0.003 | 24.7 | 2.10 | 0.62 | 0.29 | 0.018 | 0.053 | 2.72 | | 33 | 4.4 | Invention Example |

| No. | Steel Powder Symbol | Chemical Composition (mass%) | | | | | | | | | | | | | $D_{50}$ (μm) | Apparent Density (Mg/m³) | Notes |
|---|---|---|---|---|---|---|---|---|---|---|---|---|---|---|---|---|---|
| | | C | Si | Mn | P | S | Cr | Ni | Mo | Nb | N | O | Ni+Mo | Others | | | |
| 15 | A15 | 0.050 | 0.74 | 0.18 | 0.008 | 0.003 | 24.8 | 2.02 | 1.87 | 0.32 | 0.018 | 0.048 | 3.89 | Al: 0.22 | 38 | 4.5 | Invention Example |
| 16 | A16 | 0.090 | 0.41 | 0.23 | 0.008 | 0.005 | 25.1 | 1.98 | 1.88 | 0.39 | 0.018 | 0.051 | 3.86 | Ti: 0.19, V: 0.26 | 45 | 4.4 | Invention Example |
| 17 | A17 | 0.040 | 0.64 | 0.21 | 0.008 | 0.005 | 25.2 | 2.05 | 1.92 | 0.34 | 0.018 | 0.050 | 3.97 | Zr: 0.05 | 38 | 4.5 | Invention Example |
| 18 | A18 | 0.030 | 0.49 | 0.25 | 0.008 | 0.004 | 24.5 | 2.03 | 1.93 | 0.32 | 0.017 | 0.052 | 3.96 | Cu: 0.43, Co: 024 | 30 | 4.6 | Invention Example |
| 19 | A19 | 0.045 | 0.69 | 0.17 | 0.008 | 0.004 | 25.0 | 2.04 | 1.94 | 0.28 | 0.018 | 0.055 | 3.98 | B: 0.0047, Ca: 0.0022, Mg: 0.0011 | 35 | 4.0 | Invention Example |
| 20 | A20 | 0.015 | 0.43 | 0.14 | 0.009 | 0.005 | 24.6 | 2.00 | 1.89 | 0.36 | 0.017 | 0.049 | 3.89 | REM: 0.16 | 31 | 3.9 | Invention Example |
| 21 | A21 | 0.010 | 0.74 | 0.35 | 0.008 | 0.004 | 24.6 | 2.06 | 1.91 | 0.30 | 0.018 | 0.044 | 3.97 | Sn: 0.07, Sb: 0.08 | 40 | 4.3 | Invention Example |
| 22 | B1 | 0.030 | 0.42 | 0.45 | 0.008 | 0.005 | 25.8 | _2.82_ | 1.97 | 0.35 | 0.018 | 0.057 | 4.79 | | 32 | 4.6 | Comparative Example |
| 23 | B2 | 0.090 | 0.84 | _2.15_ | 0.008 | 0.005 | 25.3 | 2.12 | 1.90 | 0.34 | 0.018 | 0.053 | 4.02 | | 24 | 3.9 | Comparative Example |
| 24 | B3 | _0.250_ | 0.94 | 0.24 | 0.009 | 0.005 | 24.6 | 2.03 | 1.79 | 0.37 | 0.018 | 0.052 | 3.82 | | 32 | 4.4 | Comparative Example |
| 25 | B4 | 0.080 | 0.44 | 0.55 | 0.009 | 0.005 | 25.6 | 2.03 | 1.80 | 0.32 | _0.038_ | 0.058 | 3.83 | | 28 | 4.0 | Comparative Example |
| 26 | B5 | 0.050 | 0.84 | 0.22 | 0.008 | 0.004 | _13.9_ | 2.05 | 1.88 | 0.36 | 0.018 | 0.054 | 3.93 | | 25 | 3.8 | Comparative Example |

| No. | Steel Powder Symbol | Chemical Composition (mass%) | | | | | | | | | | | | | $D_{50}$ (μm) | Apparent Density (Mg/m$^3$) | Notes |
|---|---|---|---|---|---|---|---|---|---|---|---|---|---|---|---|---|---|
| | | C | Si | Mn | P | S | Cr | Ni | Mo | Nb | N | O | Ni+Mo | Others | | | |
| 27 | B6 | 0.060 | 0.45 | 0.32 | 0.008 | 0.005 | 25.9 | 2.03 | 0.46 | 0.38 | 0.019 | 0.052 | 2.49 | | 32 | 4.1 | Comparative Example |
| 28 | B7 | 0.070 | 0.51 | 0.16 | 0.009 | 0.005 | 25.6 | 0.08 | 1.99 | 0.35 | 0.021 | 0.053 | 2.07 | | 25 | 4.2 | Comparative Example |
| 29 | B8 | 0.020 | 0.46 | 0.19 | 0.009 | 0.005 | 25.5 | 0.89 | 0.95 | 0.33 | 0.017 | 0.056 | 1.84 | | 42 | 4.7 | Comparative Example |
| 30 | B9 | 0.032 | 0.68 | 0.21 | 0.008 | 0.003 | 25.1 | 2.06 | 1.88 | 0.33 | 0.018 | 0.049 | 3.94 | | 220 | 3.4 | Comparative Example |
| 31 | A22 | 0.008 | 0.72 | 0.23 | 0.007 | 0.004 | 24.9 | 2.01 | 1.85 | 0.34 | 0.015 | 0.045 | 3.86 | | 55 | 3.5 | Invention Example |
| 32 | A23 | 0.007 | 0.75 | 0.20 | 0.006 | 0.005 | 25.1 | 1.95 | 1.87 | 0.33 | 0.012 | 0.044 | 3.82 | | 15 | 3.8 | Invention Example |
| 33 | A24 | 0.009 | 0.71 | 0.24 | 0.008 | 0.004 | 24.7 | 1.96 | 1.89 | 0.31 | 0.011 | 0.056 | 3.85 | | 182 | 4.0 | Invention Example |
| 34 | A25 | 0.050 | 0.74 | 0.18 | 0.008 | 0.003 | 24.8 | 2.02 | 1.87 | 0.32 | 0.018 | 0.048 | 3.89 | Al: 0.29 | 38 | 4.5 | Invention Example |
| 35 | A26 | 0.090 | 0.41 | 0.23 | 0.008 | 0.005 | 25.1 | 1.98 | 1.88 | 0.39 | 0.018 | 0.051 | 3.86 | Ti: 0.29, V: 0.48 | 45 | 4.4 | Invention Example |
| 36 | A27 | 0.040 | 0.64 | 0.21 | 0.008 | 0.005 | 25.2 | 2.05 | 1.92 | 0.34 | 0.018 | 0.050 | 3.97 | Zr: 0.46 | 38 | 4.5 | Invention Example |
| 37 | A28 | 0.030 | 0.49 | 0.25 | 0.008 | 0.004 | 24.5 | 2.03 | 1.93 | 0.32 | 0.017 | 0.052 | 3.96 | Cu: 0.98, Co: 0.46 | 30 | 4.6 | Invention Example |
| 38 | A29 | 0.045 | 0.69 | 0.17 | 0.008 | 0.004 | 25.0 | 2.04 | 1.94 | 0.28 | 0.018 | 0.055 | 3.98 | B: 0.0080, Ca: 0.0094, Mg: 0.0047 | 35 | 4.0 | Invention Example |

| No. | Steel Powder Symbol | Chemical Composition (mass%) | | | | | | | | | | | | $D_{50}$ ($\mu$m) | Apparent Density (Mg/m$^3$) | Notes |
|---|---|---|---|---|---|---|---|---|---|---|---|---|---|---|---|---|---|
| | | C | Si | Mn | P | S | Cr | Ni | Mo | Nb | N | O | Ni+Mo | Others | | | |
| 39 | A30 | 0.015 | 0.43 | 0.14 | 0.009 | 0.005 | 24.6 | 2.00 | 1.89 | 0.36 | 0.017 | 0.049 | 3.89 | REM: 0.46 | 31 | 3.9 | Invention Example |
| 40 | A31 | 0.010 | 0.74 | 0.35 | 0.008 | 0.004 | 24.6 | 2.06 | 1.91 | 0.30 | 0.018 | 0.044 | 3.97 | Sn: 0.46, Sb: 0.48 | 40 | 4.3 | Invention Example |
| 41 | C1 (Steel Sheet) | 0.031 | 0.65 | 0.20 | 0.007 | 0.005 | 24.7 | 1.99 | 1.86 | 0.32 | 0.014 | 0.051 | 3.85 | | - | - | Comparative Example |

· The balance, other than the above components of the chemical composition, is Fe and unavoidable impurities.
· The underline means that the value is outside the range of the present invention.

[Table 2]

| No | Steel Powder Symbol | N$_{MnS}$ Number/mm$^2$ | (1) Additive Manufacturability Rating | (2) Corrosion Resistance Pitting Potential Vc'10 (mV vs SCE) | (3) Oxidation Resistance | | | Notes |
|---|---|---|---|---|---|---|---|---|
| | | | | | 600°C | 800°C | Rating | |
| 1 | A1 | 33 | ○ | ◎ | ○ | × | ○ | Invention Example |
| 2 | A2 | 63 | ○ | ○ | ○ | × | ○ | Invention Example |
| 3 | A3 | 28 | ○ | ◎ | ○ | ○ | ◎ | Invention Example |
| 4 | A4 | 36 | ○ | ◎ | ○ | × | ○ | Invention Example |
| 5 | A5 | 41 | ○ | ◎ | ○ | ○ | ◎ | Invention Example |
| 6 | A6 | 40 | ○ | ○ | ○ | ○ | ◎ | Invention Example |
| 7 | A7 | 35 | ○ | ○ | ○ | ○ | ◎ | Invention Example |
| 8 | A8 | 35 | ○ | ○ | ○ | × | ○ | Invention Example |
| 9 | A9 | 54 | ○ | ○ | ○ | × | ○ | Invention Example |
| 10 | A10 | 67 | ○ | ○ | ○ | × | ○ | Invention Example |
| 11 | A11 | 41 | ○ | ○ | ○ | × | ○ | Invention Example |
| 12 | A12 | 53 | ○ | ○ | ○ | × | ○ | Invention Example |
| 13 | A13 | 66 | ○ | ○ | ○ | × | ○ | Invention Example |
| 14 | A14 | 34 | ○ | ○ | ○ | × | ○ | Invention Example |

(continued)

| No | Steel Powder Symbol | $N_{MnS}$ | (1) Additive Manufacturability | (2) Corrosion Resistance | (3) Oxidation Resistance | | | Notes |
|---|---|---|---|---|---|---|---|---|
| | | Number/mm$^2$ | Rating | Pitting Potential Vc'10 (mV vs SCE) | 600°C | 800°C | Rating | |
| 15 | A15 | 33 | ○ | ○ | ○ | ○ | ◎ | Invention Example |
| 16 | A16 | 51 | ○ | ○ | ○ | × | ○ | Invention Example |
| 17 | A17 | 57 | ○ | ○ | ○ | ○ | ◎ | Invention Example |
| 18 | A18 | 42 | ○ | ◎ | ○ | × | ○ | Invention Example |
| 19 | A19 | 48 | ○ | ◎ | ○ | × | ○ | Invention Example |
| 20 | A20 | 51 | ○ | ○ | ○ | ○ | ◎ | Invention Example |
| 21 | A21 | 40 | ○ | ○ | ○ | × | ○ | Invention Example |
| 22 | B1 | 56 | ○ | ○ | × | × | × | Comparative Example |
| 23 | B2 | 59 | ○ | ○ | × | × | × | Comparative Example |
| 24 | B3 | 53 | × | Evaluation Not Possible | Evaluation Not Possible | Evaluation Not Possible | Evaluation Not Possible | Comparative Example |
| 25 | B4 | 51 | × | Evaluation Not Possible | Evaluation Not Possible | Evaluation Not Possible | Evaluation Not Possible | Comparative Example |
| 26 | B5 | 40 | ○ | × | × | × | × | Comparative Example |
| 27 | B6 | 58 | ○ | × | × | × | × | Comparative Example |
| 28 | B7 | 56 | ○ | × | ○ | × | ○ | Comparative Example |

(continued)

| No | Steel Powder Symbol | N_MnS Number/mm² | (1) Additive Manufacturability Rating | (2) Corrosion Resistance Pitting Potential Vc'10 (mV vs SCE) | (3) Oxidation Resistance 600°C | (3) Oxidation Resistance 800°C | (3) Oxidation Resistance Rating | Notes |
|---|---|---|---|---|---|---|---|---|
| 29 | B8 | 57 | ○ | × | ○ | × | ○ | Comparative Example |
| 30 | B9 | 32 | × | Evaluation Not Possible | Evaluation Not Possible | Evaluation Not Possible | Evaluation Not Possible | Comparative Example |
| 31 | A22 | 43 | ○ | ◎ | ○ | × | ○ | Invention Example |
| 32 | A23 | 51 | ○ | ◎ | ○ | × | ○ | Invention Example |
| 33 | A24 | 42 | ○ | ◎ | ○ | × | ○ | Invention Example |
| 34 | A25 | 33 | ○ | ○ | ○ | ○ | ◎ | Invention Example |
| 35 | A26 | 54 | ○ | ○ | ○ | × | ○ | Invention Example |
| 36 | A27 | 54 | ○ | ○ | ○ | ○ | ◎ | Invention Example |
| 37 | A28 | 43 | ○ | ◎ | ○ | × | ○ | Invention Example |
| 38 | A29 | 42 | ○ | ◎ | ○ | × | ○ | Invention Example |
| 39 | A30 | 53 | ○ | ○ | ○ | ○ | ◎ | Invention Example |
| 40 | A31 | 47 | ○ | ○ | ○ | × | ○ | Invention Example |
| 41 | C1 (Steel Sheet) | 382 | - | × | ○ | ○ | ◎ | Comparative Example |

The results of evaluations (1) to (3) are shown in Table 2 above. Table 2 shows that in all of Nos. 1 to 21 and 31 to 40, which are Invention Examples, the additive manufacturability, corrosion resistance, and oxidation resistance were good.

In contrast, in Comparative Examples Nos. 22 to 30, in which the chemical composition or the properties (median diameter $D_{50}$ and apparent density) were outside the appropriate ranges, not all of the additive manufacturability, corrosion resistance, and oxidation resistance were good. In the case of the steel sheet of No. 41, good corrosion resistance was not achieved.

More specifically, in Comparative Example No. 22 (steel powder symbol B1), the Ni content was greater than the upper limit of the present invention, which resulted in precipitation of an austenite phase, and, consequently, good oxidation resistance was not achieved.

In Comparative Example No. 23 (steel powder symbol B2), the Mn content was greater than the upper limit of the present invention, which resulted in precipitation of an austenite phase, and, consequently, good oxidation resistance was not achieved.

In Comparative Example No. 24 (steel powder symbol B3), the C content was greater than the upper limit of the present invention, and, consequently, good additive manufacturability was not achieved. In Comparative Example No. 24, since the desired additive manufacturability was not achieved, the subsequent evaluations of corrosion resistance and oxidation resistance were not performed (evaluations were not possible).

In Comparative Example No. 25 (steel powder symbol B4), the N content was greater than the upper limit of the present invention, and, consequently, good additive manufacturability was not achieved. In Comparative Example No. 25, since the desired additive manufacturability was not achieved, the subsequent evaluations of corrosion resistance and oxidation resistance were not performed (evaluations were not possible).

In Comparative Example No. 26 (steel powder symbol B5), the Cr content was less than the lower limit of the present invention, and, consequently, neither good corrosion resistance nor good oxidation resistance was achieved.

In Comparative Example No. 27 (steel powder symbol B6), the Mo content was less than the lower limit of the present invention, and, consequently, neither good corrosion resistance nor good oxidation resistance was achieved.

In Comparative Example No. 28 (steel powder symbol B7), the Ni content was less than the lower limit of the present invention, and, consequently, good corrosion resistance was not achieved.

In Comparative Example No. 29 (steel powder symbol B8), although the Ni content and the Mo content were each within the range of the present invention, good corrosion resistance was not achieved because the (Ni + Mo) was less than 2.00.

In Comparative Example No. 30 (steel powder symbol B9), although its chemical composition was the same as that of Invention Example No. 1 (steel powder symbol A1), good additive manufacturability was not achieved because the median diameter $D_{50}$ ($\mu$m) was 220, and the apparent density (Mg/m$^3$) was 3.4. In Comparative Example No. 30, since the desired additive manufacturability was not achieved, the subsequent evaluations of corrosion resistance and oxidation resistance were not performed (evaluations were not possible).

In the case of the steel sheet of Comparative Example No. 41 (steel sheet symbol C1), although its chemical composition was substantially the same as that of Invention Example No. 1 (steel powder symbol A1), good corrosion resistance was not achieved because the number of MnS particles per unit area (mm$^2$) was large.

Industrial Applicability

Using the stainless steel powder of the present invention makes it possible to additively manufacture stainless steel components having excellent corrosion resistance and oxidation resistance, without causing solidification cracking. Stainless steel components obtained according to the present invention are particularly suitable for use in heat exchangers and exhaust system components of automobiles. Furthermore, the stainless steel components are not limited to these applications and may be used in various components. The stainless steel powder of the present invention is suitable as a material of a ferritic stainless steel component having a complex shape and required to have excellent oxidation resistance and corrosion resistance, such as automotive exhaust system components and heat exchangers. In particular, the stainless steel powder is suitable as a material for manufacturing the foregoing stainless steel components with an additive manufacturing method.

**Claims**

1. A ferritic stainless steel powder having a chemical composition comprising, in mass%:

   C: 0.003 to 0.200%,
   Si: 0.01 to 2.00%,

Mn: 0.05 to 2.00%,
P: 0.040% or less,
S: 0.010% or less,
Cr: 15.0 to 35.0%,
Ni: 0.10 to 2.50%,
Mo: 0.50 to 3.00%,
Nb: 0.10% or greater and less than 0.70%,
N: 0.030% or less, and
O: 0.200% or less, with the balance being Fe and unavoidable impurities, the chemical composition satisfying inequality (1), shown below, wherein,
the ferritic stainless steel powder has a median diameter $D_{50}$ of 10 $\mu$m or greater and 200 $\mu$m or less and an apparent density of 3.5 Mg/m$^3$ or greater and 5.0 Mg/m$^3$ or less:

$$(Ni + Mo) \geq 2.00 \qquad (1)$$

where Ni and Mo in equation (1) are the content (mass%) of Ni and the content (mass%) of Mo, respectively.

2. The ferritic stainless steel powder according to claim 1, wherein the chemical composition further contains, in mass%, one or more selected from

Al: 0.30% or less,
Ti: 0.30% or less,
V: 0.50% or less,
Zr: 0.50% or less,
Cu: 1.00% or less,
Co: 0.50% or less,
B: 0.0100% or less,
Ca: 0.0100% or less,
Mg: 0.0050% or less,
REM: 0.50% or less,
Sn: 0.50% or less, and
Sb: 0.50% or less.

3. A ferritic stainless steel component having a chemical composition comprising, in mass%:

C: 0.003 to 0.200%
Si: 0.01 to 2.00%
Mn: 0.05 to 2.00%
P: 0.040% or less
S: 0.010% or less
Cr: 15.0 to 35.0%
Ni: 0.10 to 2.50%
Mo: 0.50 to 3.00%
Nb: 0.10% or greater and less than 0.70%,
N: 0.030% or less, and
O: 0.200% or less, with the balance being Fe and unavoidable impurities, the chemical composition satisfying inequality (1), shown below, wherein
the ferritic stainless steel component has a number $N_{MnS}$ of MnS particles per unit area that satisfies inequality (2), shown below:

$$(Ni + Mo) \geq 2.00 \qquad (1)$$

$$N_{MnS} \leq 100/mm^2 \qquad (2)$$

where Ni and Mo in equation (1) are the content (mass%) of Ni and the content (mass%) of Mo, respectively.

4. The ferritic stainless steel component according to claim 3, wherein the chemical composition further contains, in mass%, one or more selected from

Al: 0.30% or less,
Ti: 0.30% or less,
V: 0.50% or less,
Zr: 0.50% or less,
Cu: 1.00% or less,
Co: 0.50% or less,
B: 0.0100% or less,
Ca: 0.0100% or less,
Mg: 0.0050% or less,
REM: 0.50% or less,
Sn: 0.50% or less, and
Sb: 0.50% or less.

5. A method for manufacturing a ferritic stainless steel component, the method comprising manufacturing the ferritic stainless steel component with the ferritic stainless steel powder according to claim 1 or 2, by using an additive manufacturing method.

## INTERNATIONAL SEARCH REPORT

| International application No. |
| --- |
| **PCT/JP2024/032115** |

| | |
| --- | --- |
| **A.** | **CLASSIFICATION OF SUBJECT MATTER** |

*B22F 1/00*(2022.01)i; *B22F 1/05*(2022.01)i; *B22F 10/28*(2021.01)i; *B23K 35/30*(2006.01)i; *C22C 38/00*(2006.01)i; *C22C 38/58*(2006.01)i
FI:   B22F1/00 T; B22F1/05; B22F10/28; B23K35/30 340A; C22C38/00 302Z; C22C38/58

According to International Patent Classification (IPC) or to both national classification and IPC

| | |
| --- | --- |
| **B.** | **FIELDS SEARCHED** |

Minimum documentation searched (classification system followed by classification symbols)

B22F1/00; B22F1/05; B22F10/28; B23K35/30; C22C38/00; C22C38/58

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| A | WO 2023/157425 A1 (JFE STEEL CORPORATION) 24 August 2023 (2023-08-24) paragraphs [0024]-[0055], [0063]-[0069], claims | 1-5 |
| A | JP 2022-6584 A (JFE STEEL CORPORATION) 13 January 2022 (2022-01-13) claims, paragraphs [0048]-[0053] | 1-5 |
| A | WO 2019/139017 A1 (SANYO SPECIAL STEEL CO., LTD.) 18 July 2019 (2019-07-18) entire text | 1-5 |

☐ Further documents are listed in the continuation of Box C.      ☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
| --- | --- |
| **01 November 2024** | **19 November 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

INTERNATIONAL SEARCH REPORT
Information on patent family members

International application No.

**PCT/JP2024/032115**

| Patent document cited in search report | Publication date (day/month/year) | Patent family member(s) | Publication date (day/month/year) |
|---|---|---|---|
| WO 2023/157425 A1 | 24 August 2023 | EP 4450659 A1 paragraphs [0023]-[0055], [0063]-[0072], claims CN 118742662 A KR 10-2024-0134946 A | |
| JP 2022-6584 A | 13 January 2022 | (Family: none) | |
| WO 2019/139017 A1 | 18 July 2019 | US 2020/0391286 A1 entire text EP 3738695 A1 CN 111491750 A KR 10-2020-0104288 A TW 201930612 A | |

Form PCT/ISA/210 (patent family annex) (July 2022)

**REFERENCES CITED IN THE DESCRIPTION**

**Patent documents cited in the description**

- JP 2019139017 A
- JP 2019235014 A
- JP 2020110498 A
- JP 2021214958 A
- JP 6270563 B
- JP 6985940 B